# EUROPEAN PATENT APPLICATION

(11) **EP 2 273 397 A1**
(43) Date of publication of application: **12.01.2011**
(21) Application number: 10165046.3
(22) Date of filing: 07.06.2010
(51) Int. Cl.: G06F 17/50

(54) **Numerical simulation of airflow within porous materials**

(30) Priority: 08.07.2009 US 499732
(71) Applicant: Livermore Software Technology Corporation, Livermore CA 94551 (US)
(72) Inventor: Isheng, Yeh, Livermore, CA 94551 (US)
(74) Representative: Becker Kurig Straus

(57) **Abstract**

Systems and methods of numerically simulating airflow within porous materials are disclosed. According to one aspect of the present invention, engineering product represented by a finite element analysis model containing in part porous material with permeability. In each solution cycle of a time-marching simulation, each of the elements of porous material is evaluated with airflow in conjunction with the traditional mechanical response. Each element's volume change results into different air-pore pressure hence a pressure gradient, which in turn is used for airflow calculated in accordance with a fluid seepage law that depends upon permeability of the porous material. Therefore, a more realistic simulation of structural behavior of porous materials can be achieved. The volume change and pressure of each element of porous material is evaluated using ideal gas law. A general form of Darcy's law includes user control parameters is used for evaluating airflow based on the pressure gradient and permeability.

## Description

### FIELD OF THE INVENTION

The present invention generally relates to computer aided engineering analysis, more particularly to numerical simulation of airflow within porous materials in finite element analysis.

### BACKGROUND OF THE INVENTION

Finite element analysis (FEA) is a computer implemented method using a numerical technique for finding approximate solutions of partial differential equations representing complex systems such as three-dimensional non-linear structural design and analysis. The FEA originated from the need for solving complex elasticity and structural analysis problems in civil and aeronautical engineering. With the advance of the computer technology, FEA has become a vital tool for assisting engineers and scientists to make decisions in improving structural design (e.g., automobile, airplane, etc.). When applying FEA in solving a physical problem or event in time domain, it is referred to as a time-marching simulation. In general, a time-marching simulation comprises a number of solution cycles. A FEA result or solution is obtained at each solution cycle as a snap-shot of the total simulation at a particular time.

One of the most challenging FEA tasks is to simulate an impact event such as car crash. The goal of a car crash simulation is to ensure better vehicle occupant safety. To accomplish this goal, the simulation not only has to include the vehicle behavior, but also the occupant's responses (e.g., a dummy model) and other safety apparatus (e.g., seat belt, airbag, etc.). With advance of modem computer systems, all of the simulation can include all of the aforementioned safety features. The vehicle occupants' seat cushion and door trim generally contain foam material, which can be modeled with a particular type of mechanical behavior (e.g., constitutive equation corresponding stress and strain relationship). However, foam material generally contains pore-air therein. During an impact event, pore-air is squeezed therefore creating additional air pressure, which alters the structural responses or behavior of the seat and the door trim, which are considered critical components for side impact safety. This behavior becomes important when a realistic modeling of the occupants is required. None of the prior art approaches address this requirement.

Therefore, it would be desirable to have a method for numerically simulating airflow and calculating pore-air pressure within porous material, such that more realistic time-marching simulating of an engineering product made in part of porous material can be achieved. Such method will allow engineers to investigate the effect of pore-air on structure response, and then optimize the design of porous material.

### BRIEF SUMMARY OF THE INVENTION

Systems and methods of numerically simulating airflow and calculating pore-air pressure within porous materials are disclosed. According to one aspect of the present invention, engineering product is represented by a finite element analysis model containing in part porous material with permeability. In each solution cycle of a time-marching simulation, each of the elements of porous material is evaluated with airflow in conjunction with the traditional mechanical response. Each element's volume change results into different air-pore pressure hence a pressure gradient, which in turn is used for airflow calculated in accordance with a fluid seepage law that depends upon permeability of the porous material. Therefore, a more realistic simulation of structural behavior of porous materials can be achieved.

According to another embodiment, the volume change and pressure of each element of porous material is evaluated using ideal gas law. A general form of Darcy's law includes user control parameters is used for evaluating airflow based on the pressure gradient and permeability.

Other objects, features, and advantages of the present invention will become apparent upon examining the following detailed description of an embodiment thereof, taken in conjunction with the attached drawings.

### BRIEF DESCRIPTION OF THE DRAWINGS

These and other features, aspects, and advantages of the present invention will be better understood with regard to the following description, appended claims, and accompanying drawings as follows:

FIG. 1 is a flowchart illustrating an exemplary process of numerically simulating airflow within porous material, according to an embodiment of the present invention;

FIG. 2 is a diagrams showing different types of porous material, according to one embodiment of the present invention;

FIGS. 3A-3B are diagrams showing two exemplary finite elements representing porous material in initial and deformed conditions;

FIG. 4 is a diagram showing exemplary equations that can be used for evaluating pressure and airflow within porous material, according to an embodiment of the present invention; and

FIG. 5 is a function diagram showing salient components of a computing device, in which an embodiment of the present invention may be implemented.

### DETAILED DESCRIPTION

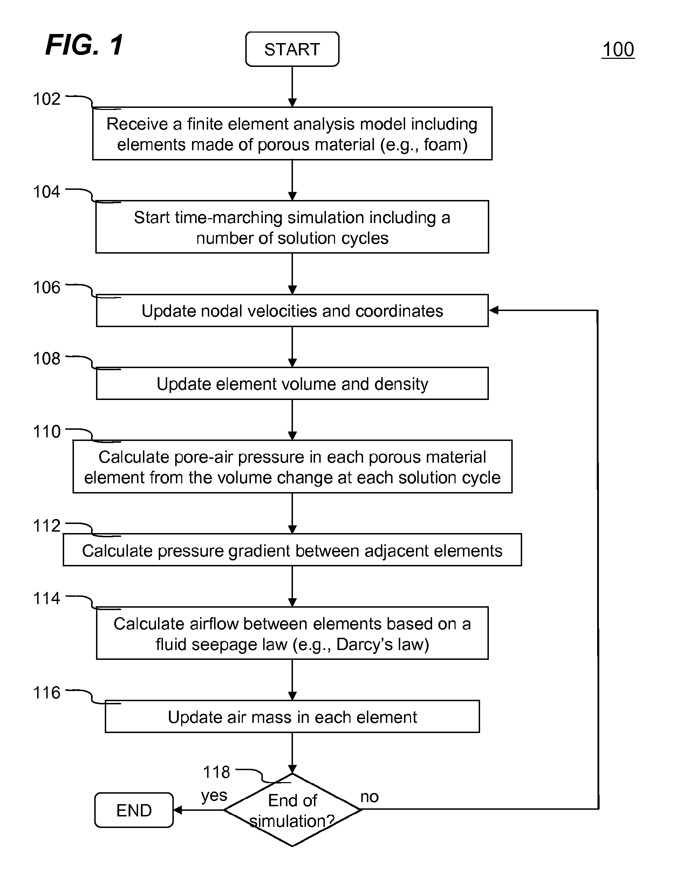

Referring first to FIG. 1, a flowchart illustrating an exemplary process 100 of numerically simulating airflow within porous material in a finite element analysis (FEA) used for assisting a user (e.g., engineer or scientist) to make decision in improvement of an engineering product (e.g., car or one of its components, etc.), according to one embodiment of the present invention. Process 100 is preferably implemented in software.

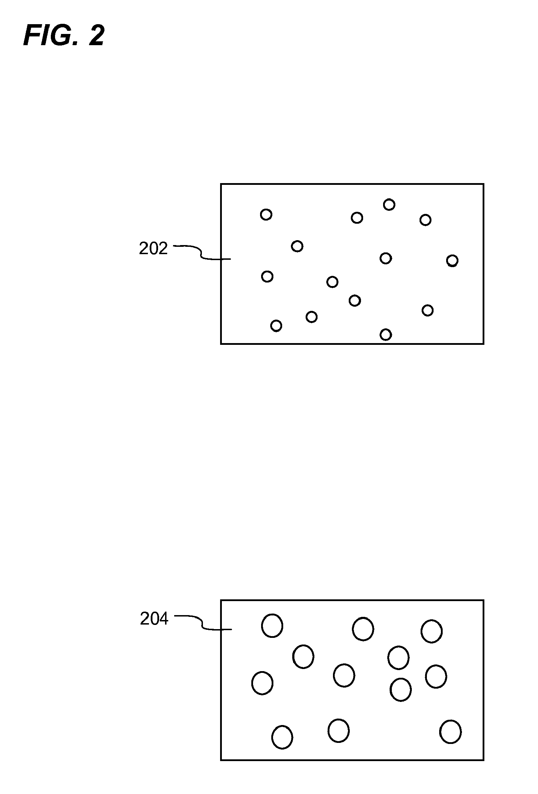

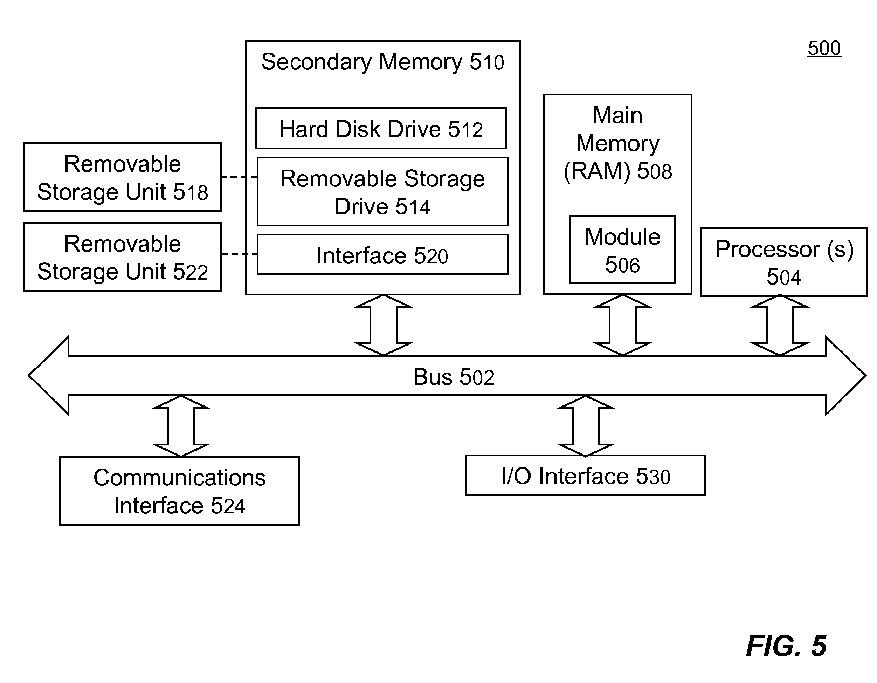

Process 100 starts by receiving a definition of an engineering product in form of a FEA model in a computer system (e.g., computer 500 of FIG. 5) at step 102. The FEA model includes a number of elements including a plurality of porous material elements. For example, an automobile can be represented by a FEA model with a number of shell elements for the car body, a group of porous material elements and other elements. Generally, a porous material can be defined as a particular type of element, for example, foam. Additionally, the porous material is associated with permeability that dictates the airflow behavior within. For example, FIG. 2 shows two different porous materials 202-204. These two materials can comprise different mechanical properties (i.e., stress-strain relationship) and permeability.

Next, at step 104, process 100 starts a time-marching simulation of the engineering product using the FEA model in the computer system with a FEA application module installed thereon. The time-marching simulation comprises a number of solution cycles. The structural behaviors under certain loading condition during a time period are computed at each of the solution cycles. Process 100 updates nodal velocities and coordinates of each element in the FEA model at step 106. At onset of the simulation, nodal velocities and coordinates are the initial values specified by the user. Next, at step 108, the volume and density of each element is updated using the nodal coordinates.

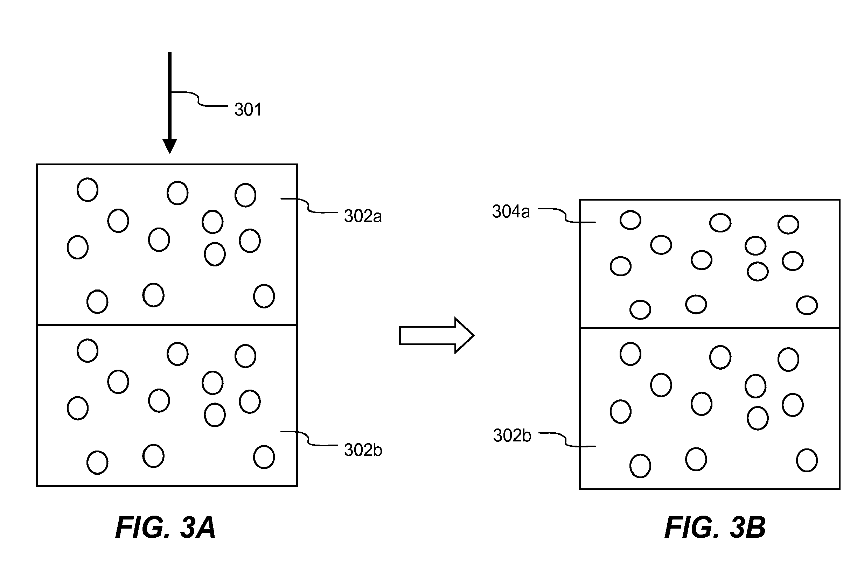

FIG. 3A and FIG. 3B show two porous material elements in initial condition and deformed conditions, respectively. First and second elements 302a-b under a force 301 (e.g., initial loading, initial velocity, etc.). The first element 302a is squeezed and deformed thereafter (i.e., the next solution cycle) shown as deformed elements 304a in FIG. 3B. In a very short period of time, the second element 302b stays undeformed. The deformed first element 304a is updated at each solution cycle for its nodal velocities and coordinates and volume. The air packets inside the first element 302a are squeezed to different shapes shown in deformed element 304a.

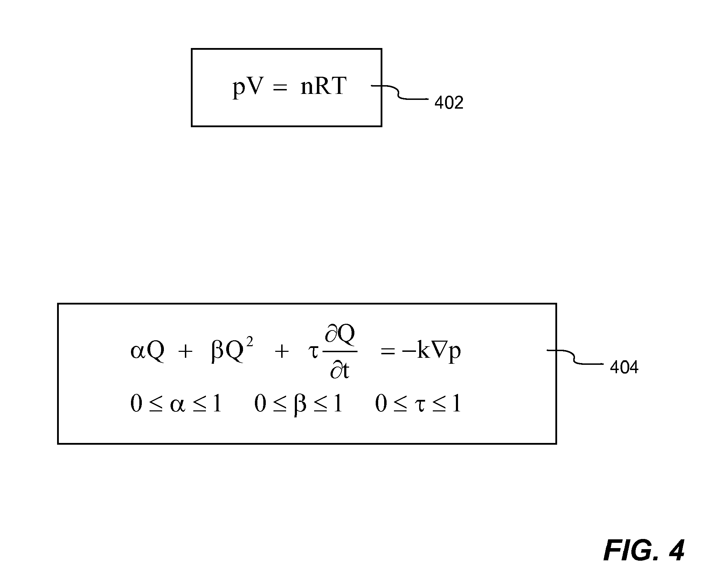

Due to the volume change in each porous material element, pore-air pressure can be determined at step 110. For example, the ideal gas law may be used to determine the pressure from the volume change. Equation 402 shown in FIG. 4 is the ideal gas law, where "p" is the pressure, "V' is the volume, "T" is the absolute temperature, "n" is number of moles and "R" is the gas constant of pore-air. For very sort period of time such as between two consecutive solution cycles, the absolute temperature "T" can be assumed to be the same. Therefore, the pressure "p" and the volume "V" can be determined.

At step 112, the pressure gradient between each pair of adjacent porous material elements is calculated from the updated pressure at each element. Then at step 114, the airflow between porous material elements can be determined in accordance with a fluid seepage law that depends upon permeability of the porous material and pressure gradient.

Equation 404 is a generalized form of fluid seepage law that allows three user-defined parameters (α, β and τ) to control the behavior of the airflow in porous material. In Equation 404, "Q' is the fluid discharge flow in the porous material, "p" is the pressure and "∇p " is the pressure gradient and "k" is permeability of the porous material. Each of the user-defined parameters is between 0 and 1, for example, when α is set to 1 and β and τ to 0, Equation 404 becomes Darcy's law.

Process 100 updates air mass of each porous material element to reflect the airflow between elements at step 116. Next, at decision 118, it is determined whether the time-marching simulation has ended. If 'no', process 100 goes back to step 106 repeating steps 106-116 for another solution cycle. Otherwise, process 100 ends.

According to one aspect, the present invention is directed towards one or more computer systems capable of carrying out the functionality described herein. An example of a computer system 500 is shown in FIG. 5. The computer system 500 includes one or more processors, such as processor 504. The processor 504 is connected to a computer system internal communication bus 502. Various software embodiments are described in terms of this exemplary computer system. After reading this description, it will become apparent to a person skilled in the relevant art(s) how to implement the invention using other computer systems and/or computer architectures.

Computer system 500 also includes a main memory 508, preferably random access memory (RAM), and may also include a secondary memory 510. The secondary memory 510 may include, for example, one or more hard disk drives 512 and/or one or more removable storage drives 514, representing a floppy disk drive, a magnetic tape drive, an optical disk drive, flash memory card reader, etc. The removable storage drive 514 reads from and/or writes to a removable storage unit 518 in a well-known manner. Removable storage unit 518, represents a floppy disk, magnetic tape, optical disk, flash memory, etc. which is read by and written to by removable storage drive 514. As will be appreciated, the removable storage unit 518 includes a computer recordable storage medium having stored therein computer software and/or data.

In alternative embodiments, secondary memory 510 may include other similar means for allowing computer programs or other instructions to be loaded into computer system 500. Such means may include, for example, a removable storage unit 522 and an interface 520. Examples of such may include a program cartridge and cartridge interface (such as that found in video game devices), a removable memory chip (such as an Erasable Programmable Read-Only Memory (EPROM), Universal Serial Bus (USB) flash memory, or PROM) and associated socket, and other removable storage units 522 and interfaces 520 which allow software and data to be transferred from the removable storage unit 522 to computer system 500. In general, Computer system 500 is controlled and coordinated by operating system (OS) software, which performs tasks such as process scheduling, memory management, networking and I/O services.

There may also be a communications interface 524 connecting to the bus 502. Communications interface 524 allows software and data to be transferred between computer system 500 and external devices. Examples of communications interface 524 may include a modem, a network interface (such as an Ethernet card), a communications port, a Personal Computer Memory Card International Association (PCMCIA) slot and card, etc.

The computer 500 communicates with other computing devices over a data network based on a special set of rules (i.e., a protocol). One of the common protocols is TCP/IP (Transmission Control Protocol/Internet Protocol) commonly used in the Internet. In general, the communication interface 524 manages the assembling of a data file into smaller packets that are transmitted over the data network or reassembles received packets into the original data file. In addition, the communication interface 524 handles the address part of each packet so that it gets to the right destination or intercepts packets destined for the computer 500.

In this document, the terms "computer program medium" and "computer recordable medium" are used to generally refer to media such as removable storage drive 514, and/or a hard disk installed in hard disk drive 512. These computer program products are means for providing software to computer system 500. The invention is directed to such computer program products.

The computer system 500 may also include an input/output (I/O) interface 530, which provides the computer system 500 to access monitor, keyboard, mouse, printer, scanner, plotter, and alike.

Computer programs (also called computer control logic) are stored as application modules 506 in main memory 508 and/or secondary memory 510. Computer programs may also be received via communications interface 524. Such computer programs, when executed, enable the computer system 500 to perform the features of the present invention as discussed herein. In particular, the computer programs, when executed, enable the processor 504 to perform features of the present invention. Accordingly, such computer programs represent controllers of the computer system 500.

In an embodiment where the invention is implemented using software, the software may be stored in a computer program product and loaded into computer system 500 using removable storage drive 514, hard drive 512, or communications interface 524. The application module 506, when executed by the processor 504, causes the processor 504 to perform the functions of the invention as described herein.

The main memory 508 may be loaded with one or more application modules 506 (e.g., finite element analysis application module) that can be executed by one or more processors 504 with or without a user input through the I/O interface 530 to achieve desired tasks. In operation, when at least one processor 504 executes one of the application modules 506, the results are computed and stored in the secondary memory 510 (i.e., hard disk drive 512). The result and/or status of the finite element analysis (e.g., results or structural responses at each solution cycle) is reported to the user via the I/O interface 530 either in a text or in a graphical representation to a monitor coupled to the computer.

Although the present invention has been described with reference to specific embodiments thereof, these embodiments are merely illustrative, and not restrictive of, the present invention. Various modifications or changes to the specifically disclosed exemplary embodiments will be suggested to persons skilled in the art. For example, whereas the porous material has been shown and described as foam. Other types of porous material can be used, for example, sponge. Furthermore, whereas the fluid seepage law has been described as Darcy's law. Other types of empirical formulas can be used instead, for example, a result of physical experiment or test. Finally, whereas the ideal gas law has been described for air, other governing laws and relationships may be used for other types of fluid, for example, water. In summary, the scope of the invention should not be restricted to the specific exemplary embodiments disclosed herein, and all modifications that are readily suggested to those of ordinary skill in the art should be included within the spirit and purview of this application and scope of the appended claims.

## Claims

1. A method of numerically simulating airflow within a porous material in a finite element analysis (FEA) used for assisting a user to make decision in improvement of an engineering product comprising:
(a) receiving, in a computer system, a definition of an engineering product in form of a FEA model, which includes a plurality of elements made of porous material;
(b) starting a time-marching simulation using the FEA model in the computer system with a FEA application module installed thereon, the time-marching simulation includes a plurality of solution cycles;
(c) calculating a set of structural responses at each solution cycle, the set of structural responses includes an updated air-pore pressure of each of the elements made of porous material;
(d) updating an updated air mass of said each of the elements including effect from an airflow between two adjacent one of the elements according to a fluid seepage law that depends on a pressure gradient of said two adjacent one of the elements and the porous material's permeability;
(e) repeating (c) and (d) until the time-marching simulation ends; and
(f) displaying, in an output device coupled to the computer system, the time-marching simulation's result of any or all of the solution cycles as desired.

2. The method of Claim 1, wherein the FEA model includes a loading condition used for designing the engineering product.

3. The method of Claim 1, wherein the updated air-pore pressure is based on said each element's density and volume.

4. The method of Claim 3, wherein the volume is calculated from the mass of said each element.

5. The method of Claim 3, further comprises updating said each element's nodal velocities and coordinates.

6. The method of Claim 1, wherein the fluid seepage law comprises Darcy's law.

7. The method of Claim 1, wherein the fluid seepage law is configured to include at least one user-defined parameter for controlling various behaviors of the airflow.

8. A computer recordable storage medium containing instructions for controlling a computer system for numerically simulating airflow within a porous material in a finite element analysis (FEA) used for assisting a user to make decision in improvement of an engineering product by a method comprising:
(a) receiving, in a computer system, a definition of an engineering product in form of a FEA model, which includes a plurality of elements made of porous material;
(b) starting a time-marching simulation using the FEA model in the computer system with a FEA application module installed thereon, the time-marching simulation includes a plurality of solution cycles;
(c) calculating a set of structural responses at each solution cycle, the set of structural responses includes an updated air-pore pressure of each of the elements made of porous material;
(d) updating an updated air mass of said each of the elements including effect from an airflow between two adjacent one of the elements according to a fluid seepage law that depends on a pressure gradient of said two adjacent one of the elements and the porous material's permeability;
(e) repeating (c) and (d) until the time-marching simulation ends; and
(f) displaying, in an output device coupled to the computer system, the time-marching simulation's result of any or all of the solution cycles as desired.

9. The computer recordable storage medium of Claim 8, wherein the FEA model includes a loading condition used for designing the engineering product.

10. The computer recordable storage medium of Claim 8, wherein the updated air-pore pressure is based on said each element's density and volume.

11. The computer recordable storage medium of Claim 10, wherein the volume is calculated from the mass of said each element.

12. The computer recordable storage medium of Claim 10, further comprises updating said each element's nodal velocities and coordinates.

13. The computer recordable storage medium of Claim 8, wherein the fluid seepage law is configured to include at least one user-defined parameter for controlling various behaviors of the airflow.

14. A system for numerically simulating airflow within a porous material in a finite element analysis (FEA) used for assisting a user to make decision in improvement of an engineering product comprising:
a main memory for storing computer readable code for a FEA application module;
at least one processor coupled to the main memory, said at least one processor executing the computer readable code in the main memory to cause the FEA application module to perform operations of:
(a) receiving, in a computer system, a definition of an engineering product in form of a FEA model, which includes a plurality of elements made of porous material;
(b) starting a time-marching simulation using the FEA model in the computer system with a FEA application module installed thereon, the time-marching simulation includes a plurality of solution cycles;
(c) calculating a set of structural responses at each solution cycle, the set of structural responses includes an updated air-pore pressure of each of the elements made of porous material;
(d) updating an updated air mass of said each of the elements including effect from an airflow between two adjacent one of the elements according to a fluid seepage law that depends on a pressure gradient of said two adjacent one of the elements and the porous material's permeability;
(e) repeating (c) and (d) until the time-marching simulation ends; and
(f) displaying, in an output device coupled to the computer system, the time-marching simulation's result of any or all of the solution cycles as desired.

15. The system of Claim 14, wherein the updated air-pore pressure is based on said each element's density and volume.
